# EUROPEAN PATENT APPLICATION

(11) **EP 3 725 863 A1**
(43) Date of publication of application: **21.10.2020**
(21) Application number: 18887946.4
(22) Date of filing: 07.12.2018
(51) Int. Cl.: C09K 21/12

(54) **COMPOSITION AND FIRE-RETARDANT RESIN COMPOSITION**

(30) Priority: 14.12.2017 JP 2017239757
(71) Applicant: ADEKA CORPORATION, Arakawa-ku Tokyo 116-8554 (JP)
(72) Inventor: NI, Yang, Saitama-shi, Saitama 336-0022 (JP); YONEZAWA, Yutaka, Saitama-shi, Saitama 336-0022 (JP); TANJI, Naoko, Saitama-shi, Saitama 336-0022 (JP)
(74) Representative: Forstmeyer, Dietmar
(86) International application number: PCT/JP2018/045170
(87) International publication number: WO 2019/117049

(57) **Abstract**

A heat-resistant composition useful as a flame retardant, a flame retardant composition containing the same, and a flame-retardant resin composition are provided. The composition contains 20 to 50 parts by mass of a specific melamine salt as component (A), 50 to 80 parts by mass of a specific piperazine salt as component (B), and 1 to 50 parts by mass of a phosphoric ester compound having a specific structure as component (C), wherein the sum of the components (A) and (B) is 100 parts by mass.

## Description

### Technical Field

This invention relates to a composition, use of the composition as a flame retardant, and a flame-retardant resin composition containing the flame retardant.

### Background Art

Resins have been applied widely to constructional materials, automotive parts, packaging materials, agricultural materials, housings of household electric appliances, toys, and so forth because of their excellent chemical and mechanical characteristics. Most of synthetic resins are combustible and need to be rendered flame-retardant for some applications. It is well known that flame retardation of resins is achieved by using halogen flame retardants, inorganic phosphorus flame retardants typified by red phosphorus and polyphosphate flame retardants, such as ammonium polyphosphates, organic phosphorus flame retardants typified by triarylphosphoric ester compounds, metal hydroxides, antimony oxide, which is a flame retardant synergist, and melamine compounds, either alone or as a combination thereof.

*Inter alia,* intumescent flame retardants comprising mainly a salt between polyphosphoric acid or pyrophosphoric acid and a nitrogen-containing compound exhibit excellent flame retardancy. Intumescent flame retardants swell on combustion to form a swollen surface layer, which prevents diffusion of a decomposition product and heat transfer thereby to achieve flame retardation. Such a flame retardant is described, e.g., in patent literature 1 below.

Patent literature 2 proposes a flame retardant comprising a combination of a nitrogen compound, such as a melamine phosphate or ammonium polyphosphate, and a bicyclic phosphate compound.

Patent literatures 3 and 4 describe a phosphoric ester having a specific structure as usable as a flame retardant or plasticizer for thermoplastic resins.

Non-Patent literature 1 below describes a method for synthesizing a phosphoric ester having a specific structure and the evaluation on flame retardancy of the phosphoric ester.

### CITATION LIST

### Patent literature:

Patent literature 1: JP 2003-2693 5A
Patent literature 2: JP H4-57707B
Patent literature 3: JP 5865195
Patent literature 4: JP 2014-9297A

### Non-Patent literature:

No-Patent literature 1: Puyou Jia, Meng Zhang, Lihong Hu, Guodong Feng, and Yonghong Zhou, "Synthesis of novel caged phosphate esters and their flame retardant effect on poly(vinyl chloride) blends", Chemistry Letters, 2015, vol. 44, No. 9.

### Summary of Invention

A flame retardant is required to have high heat resistance. A composition with higher heat resistance tends to have higher flame retardant effect. A composition having sufficient heat resistance has not yet been developed.

Accordingly, an object of the invention is to provide a highly heat-resistant composition that can be used as a flame retardant. Another object is to provide a flame retardant composition containing the composition and a flame-retardant resin composition.

As a result of extensive investigations, the inventors have found that when a combination of a specific melamine salt and a specific piperazine salt is further combined with a specific compound, the resulting composition exhibits excellent heat resistance.

The invention provides, on the basis of the above finding, a composition containing: 20 to 50 parts by mass of component (A), 50 to 80 parts by mass of component (B), and 1 to 50 parts by mass of component (C), wherein the sum of the components (A) and (B) is 100 parts by mass:
(A) at least one melamine salt selected from the group consisting of melamine orthophosphate, melamine pyrophosphate, and melamine polyphosphate,
(B) at least one piperazine salt selected from the group consisting of piperazine orthophosphate, piperazine pyrophosphate, and piperazine polyphosphate,
(C) a compound represented by general formula (1): 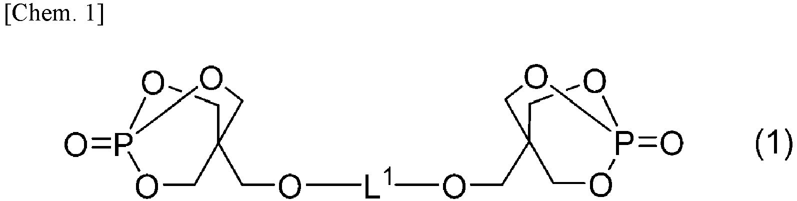
wherein L¹ is a linking group and represents an aromatic group having 6 to 22 carbon atoms or an aliphatic group having 1 to 22 carbon atoms, part of the methylene groups of the aromatic or aliphatic group being optionally replaced with a carbonyl group and/or an amino group.

The invention also provides a flame retardant composition containing the composition; a flame-retardant resin composition containing a resin and the composition; and a molded article of the flame-retardant resin composition.

The invention also provides a method for making a resin flame-retardant, the method including mixing the resin with the composition; and the use of the composition as a flame retardant.

### Description of Embodiments

The invention will be described on the basis of its preferred embodiments.

As used herein, the term "flame retardancy" means the property of having resistance to ignition, being ignitable but allowing only a very low speed of flame spread, or being ignitable but self-distinguishing. The flame-retardant resin composition of the invention is preferably rated at least V-1, more preferably V-0, in the UL 94 test. The term "flame retardant composition" as used herein refers to a composition containing at least one flame retardant. The term "flame-retardant resin composition" refers to a composition containing at least one resin and having the above-defined flame retardancy.

The composition of the invention is characterized by containing all the components (A), (B), and (C).

The melamine salt that is used as component (A) in the composition of the invention is selected from the group consisting of melamine orthophosphate, melamine pyrophosphate, and melamine polyphosphate. These melamine salts may be used either individually or in combination. Preferred of them is melamine pyrophosphate in terms of flame retardation effect, handling properties, and storage stability. When two or more of the melamine salts are used in combination, it is preferred that the mass proportion of melamine pyrophosphate be the highest in the melamine salts.

While the melamine phosphate may be obtained by the reaction between a corresponding phosphoric acid or phosphate and melamine, it is preferable to use as component (A) melamine pyrophosphate or melamine polyphosphate, particularly melamine pyrophosphate, obtained by heat-condensation of melamine orthophosphate.

The piperazine salt that is used as component (B) in the composition of the invention is selected from the group consisting of piperazine orthophosphate, piperazine pyrophosphate, and piperazine polyphosphate. These piperazine salts may be used either individually or in combination. Preferred of them is piperazine pyrophosphate in terms of flame retardation effect, handling properties, and storage stability. When two or more piperazine salts are used in combination, it is preferred that the mass proportion of piperazine pyrophosphate be the highest in the piperazine salts.

While the piperazine phosphate may be obtained by the reaction between a corresponding phosphoric acid or phosphate and piperazine, it is preferable to use as component (B) piperazine pyrophosphate or piperazine polyphosphate, particularly piperazine pyrophosphate, obtained by heat-condensation of piperazine orthophosphate.

The content of component (A) in the composition of the present invention is preferably 10 to 50 parts by mass, more preferably 20 to 40 parts by mass, per 100 parts by mass of the sum of components (A) and (B). The content of component (B) in the composition of the present invention is preferably 50 to 90 parts by mass, preferably 60 to 80 parts by mass, per 100 parts by mass of the sum of components (A) and (B). When the components (A) and (B) in that mass ratio are combined with component (C) hereinafter described, the intumescence (swollen surface layer) formed on burning exhibits high gas barrier and self-extinguishing properties.

The sum of the contents of components (A) and (B) in the composition of the invention is preferably 70 to 99.9 mass%, more preferably 80 to 99 mass%. The sum of the contents of components (A) and (B) of 70 mass% or more is preferred in terms of enhancement of the flame retardation effect, and that of 99.9 mass% or less is preferred in view of addition of component (C) and other optional components to enhance the effect of the invention. The contents of the melamine salt and the piperazine salt can be determined by ion chromatography.

Component (C) for use in the composition of the invention will then be described. The composition of the invention contains a compound represented by general formula (1) below as component (C). Containing the compound of formula (1), the composition of the invention exhibits excellent heat resistance and hardly decomposes in high temperatures, making it possible to provide a flame-retardant resin composition and molded articles thereof with improved stability. 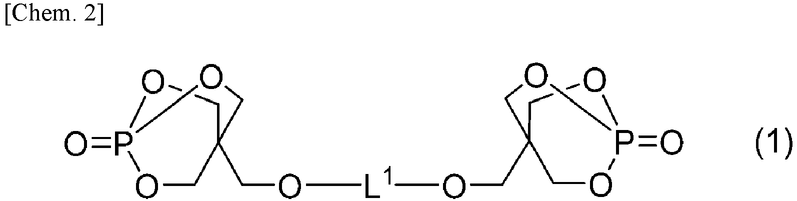 wherein L¹ is a linking group and represents an aromatic group having 6 to 22 carbon atoms or an aliphatic group having 1 to 22 carbon atoms, part of the methylene groups of the aromatic or aliphatic group being optionally replaced with a carbonyl group and/or an amino group.

The C6-C22 aromatic group in formula (1) may have a substituent and may be represented by general formula (3-1): 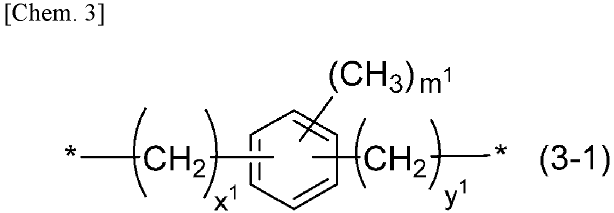 wherein m¹ represents an integer of 0 to 4; x¹ and y¹ each independently represent an integer of 0 to 8; and the asterisk mark * indicates the position of the bond to the adjacent oxygen atom.

In formula (3-1), m¹ is preferably 0, x¹ is preferably 1 or 2, and y¹ is preferably 1 or 2.

Examples of the C1-C22 aliphatic group in formula (1) include methylene, ethylene, n-propylene, isopropylene, n-butylene, isobutylene, n-pentylene, isopentylene, n-hexylene, isohexylene, n-heptylene, isoheptylene, n-octylene, isooctylene, n-nonylene, isononylene, n-decylene, isodecylene, n-undecylene, isoundecylene, n-dodecylene, isododecylene, tridecylene, tetradecylene, pentdecylene, hexadecylene, heptadecylene, octadecylene, nonadecylene, and eicosylene. The linking group which is an aliphatic group with part of its methylene groups replaced with an amino group may be represented by general formula (4-1) below. The number of the carbon atoms of the aliphatic group in formula (1) is preferably 2 to 12. 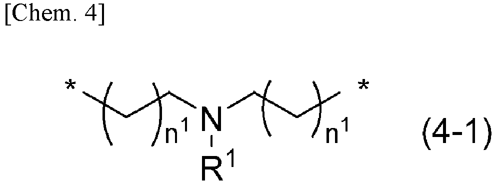 wherein R¹ represents a hydrogen atom or an aliphatic group having 1 to 22 carbon atoms; n¹ each independently represent an integer of 0 to 10; and the asterisk mark * indicates the position of the bond to the adjacent oxygen atom.

In formula (4-1), n¹ is preferably 0 to 7, more preferably 0 to 5. Examples of the C1-C22 aliphatic group represented by R in formula (4-1) include groups derived from those enumerated for the C1-C22 aliphatic group in formula (1).

L¹ in formula (1) is preferably a linking group represented by general formula (2) shown below. The linking group of formula (2) corresponds to the linking group L¹ in formula (1) having the methylene group at both terminals replaced with a carbonyl group. 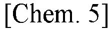 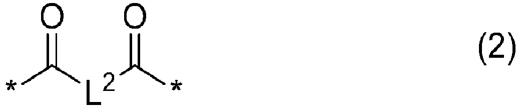 wherein L² is a linking group and represents an aromatic group having 6 to 20 carbon atoms or an aliphatic group having 1 to 20 carbon atoms, part of the methylene groups of the aromatic or aliphatic group being optionally replaced with an amino group; and the asterisk mark * indicates the position of the bond to the adjacent oxygen atom.

The C6-C22 aromatic group in formula (1) may have a substituent and may be represented by general formula (3-2): 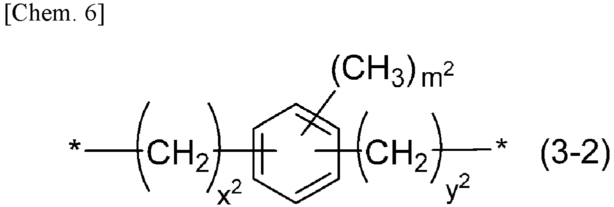 wherein m² represents an integer of 0 to 4; x² and y² each independently represent an integer of 0 to 7; and the asterisk mark * indicates the position of the bond to the carbon atom of the adjacent carbonyl group.

In formula (3-2), m² is preferably 0 to 2, x² is preferably 0 or 1, and y² is preferably 0 or 1. The aromatic group of formula (3-2) is most preferably a phenylene group (i.e., m² = 0, x² = 0, and y² = 0). The position of substitution on the benzene ring may be any of ortho, meta, and para but is preferably meta or para, more preferably meta.

Examples of the C1-C20 aliphatic group in formula (2) include methylene, ethylene, n-propylene, isopropylene, n-butylene, isobutylene, n-pentylene, isopentylene, n-hexylene, isohexylene, n-heptylene, isoheptylene, n-octylene, isooctylene, n-nonylene, isononylene, n-decylene, isodecylene, n-undecylene, isoundecylene, n-dodecylene, isododecylene, tridecylene, tetradecylene, pentdecylene, hexadecylene, heptadecylene, octadecylene, nonadecylene, and eicosylene. The linking group which is an aliphatic group with part of its methylene groups replaced with an amino group may be represented by general formula (4-2) below. The number of the carbon atoms of the aliphatic group in formula (2) is preferably 2 to 10. 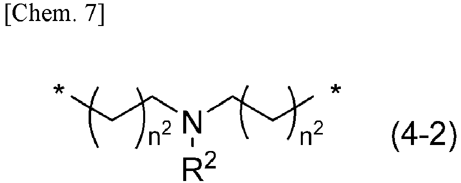 wherein R² represents a hydrogen atom or an aliphatic group having 1 to 22 carbon atoms; n² each represent an integer of 0 to 10; and the asterisk mark * indicates the position of the bond to the carbon atom of the adjacent carbonyl group.

In formula (4-2), n² is preferably 0 to 6, and more preferably 0 to 4. Examples of the C1-C22 aliphatic group represented by R² in formula (4-2) include those enumerated for the C1-C22 aliphatic group in formula (1).

Examples of the compound of formula (1) used in the invention include, but are not limited to, compound Nos. 1 through 13 shown below.

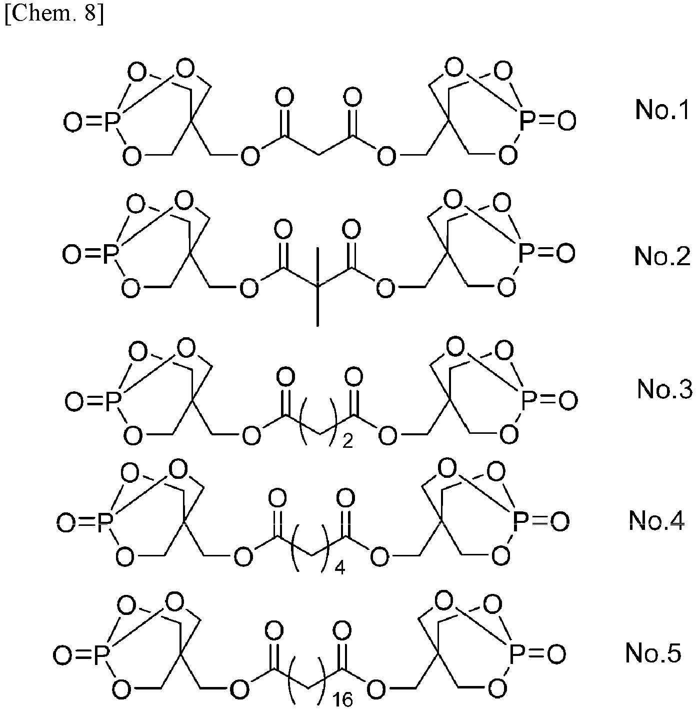

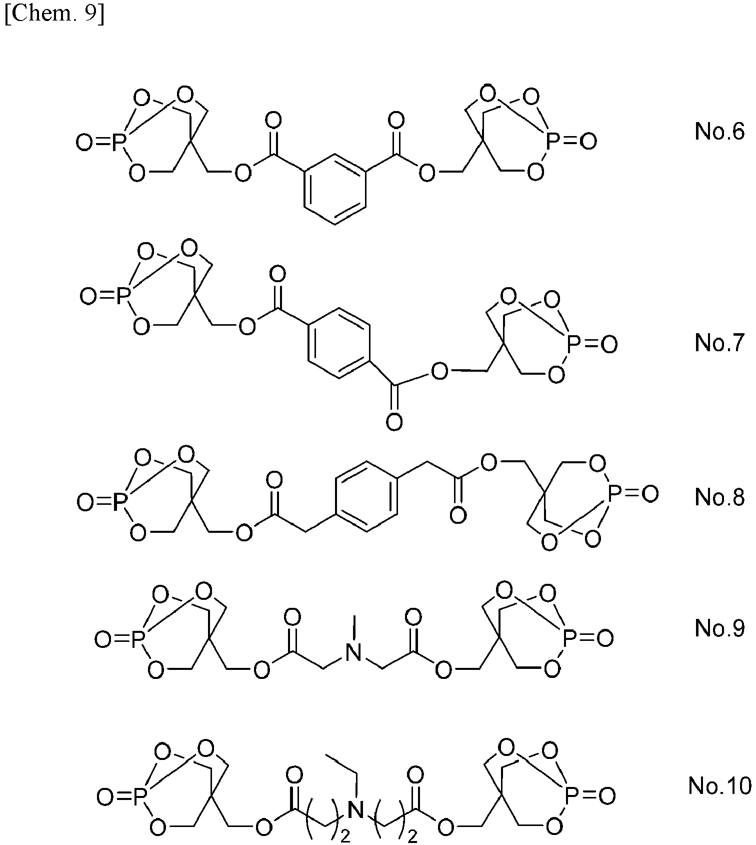

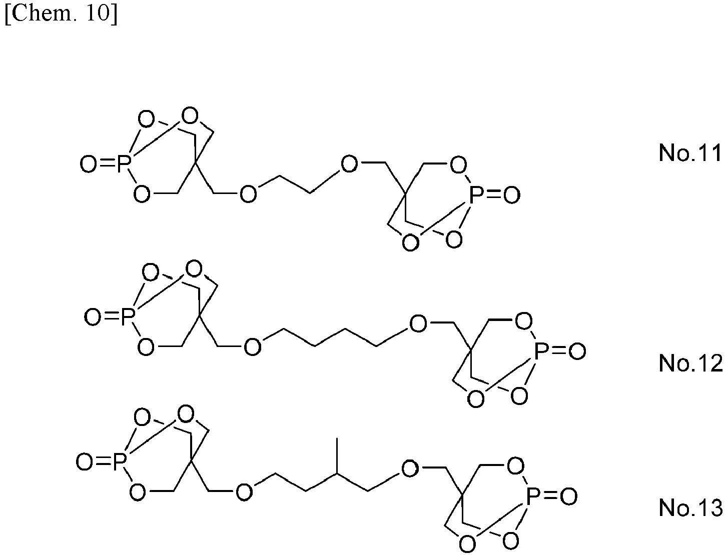

The compound of formula (1) used in the composition of the invention is prepared by known methods. For example, compound No. 6 is obtained by the reaction between 2 equivalents of 4-hydroxymethyl-2,6,7-trioxa-1-phosphabicyclo[2.2.2]octane 1-oxide and 1.0 equivalent of isophthaloyl chloride in the presence of triethylamine.

The content of component (C) in the composition of the invention is preferably 1 to 50 parts by mass per 100 parts by mass of the sum of components (A) and (B). The content of component (C) is preferably 2 to 20 parts, more preferably 3 to 10 parts, by mass per 100 parts by mass of the sum of components (A) and (B), in terms of flame retardancy. The content of component (C) of 1 part or more is advantageous for drip prevention and intumescence formation. The content of component (C) of 20 parts or less is advantageous in terms of minimization of machine contamination and fabricability. The content of the compound of formula (1) in the composition of the invention can be measured by, for example, an NMR analyzer.

The composition of the invention may further contain zinc oxide (ZnO) as component (D).

Zinc oxide functions in the composition as a flame retardant synergist. The zinc oxide may be surface-treated. Commercially available zinc oxide may be used. Examples of useful commercial products are zinc oxide JIS class 1 (available from Mitsui Mining & Smelting Co., Ltd.), partially coated zinc oxide (from Mitsui Mining & Smelting), Nanofine® 50 (ultrafine zinc oxide with an average particle size of 0.02 µm, from Sakai Chemical Industry Co., Ltd.), and Nanofine K (zinc silicate-coated ultrafine zinc oxide with an average particle size of 0.02 µm, from Sakai Chemical Industry).

In view of flame retardation, the content of zinc oxide as component (D) in the composition of the invention is preferably 0.01 to 10 parts, more preferably 0.5 to 8 parts, even more preferably 1 to 5 parts, by mass per 100 parts by mass of the sum of components (A) and (B). With the zinc oxide content of 0.01 parts by mass or more, further improved flame retardancy is exhibited. With the zinc oxide content of 10 parts by mass or less, adverse effect on fabricability is avoided.

The composition of the invention, which is usually in powder form, preferably contains as component (E) at least one member selected from a silicone oil, an epoxy coupling agent, a hydrotalcite compound, and a lubricant, in view of inhibiting agglomeration thereby to improve storage stability, dispersibility in resins, and flame retardancy.

Examples of useful silicone oils include dimethyl silicone oil (i.e., polysiloxane having methyl in all the side chains and both the terminals), methylphenyl silicone oil (i.e., polysiloxane having methyl in the side chains and terminal and phenyl in part of the side chains), methylhydrogen silicone oil (i.e., polysiloxane having methyl in the side chains and terminals and hydrogen in part of the side chains), and copolymers thereof. Modified silicone oils derived from these silicone oils by introducing an organic group to part of their side chains and/or terminals are also useful, including amino-modified, epoxy-modified, alicyclic epoxy-modified, carboxyl-modified, carbinol-modified, mercapto-modified, polyether-modified, long-chain alkyl-modified, fluoroalkyl-modified, higher fatty acid ester-modified, higher fatty acid amide-modified, silanol-modified, diol-modified, and phenol- and/or aralkyl-modified.

Specifically, examples of dimethyl silicone oil include KF-96, KF-965, and KF-968 (all from Shin-Etsu Chemical Co., Ltd.). Examples of methylhydrogen silicone oil include KF-99 and KF-9901 (both from Shin-Etsu Chemical); HMS-151, HMS-071, HMS-301, and DMS-H21 (all from Gelest, Inc.). Examples of methylphenyl silicone oil are KF-50, KF-53, KF-54, and KF-56 (all from Shin-Etsu Chemical). Examples of epoxy-modified silicone oil include X-22-343, X-22-2000, KF-101, KF-102, and KF-1001 (all from Shin-Etsu Chemical). Examples of carboxyl-modified silicone oil include X-22-3701E (from Shin-Etsu Chemical). Examples of carbinol-modified silicone oil are X-22-4039 and X-22-4015 (both from Shin-Etsu Chemical). Amino-modified silicone oil is exemplified by KF-393 (from Shin-Etsu Chemical).

Preferred of the silicone oils is methylhydrogen silicone oil in terms of prevention of agglomeration of the powder composition, improvement of storage stability, and improvement of dispersibility in resins.

The epoxy coupling agent may be an epoxy-containing compound represented by general formula: A-(CH₂)ₖ-Si(OR)₃, wherein A is an epoxy group; k is a number of 1 to 3, and R is methyl or ethyl. Examples of the epoxy group include glycidoxy and 3,4-epoxycyclohexyl.

Examples of the epoxy coupling agent include epoxy-containing silane coupling agents, such as 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, and glycidoxyoctyltrimethoxysilane.

The hydrotalcite compound is a complex salt compound composed of magnesium, aluminum, hydroxyl groups, a carbonic group, and optionally crystallization water, which naturally occurs or is synthesized. In the hydrotalcite compound, part of magnesium or aluminum may be replaced with other metals, such as alkali metals and zinc, and the hydroxyl group or carbonic group may be replaced with a different anionic group. Examples of such a hydrotalcite compound include those represented by formula (5) below in which part of the metals is optionally replaced with an alkali metal, and Al-Li-based hydrotalcite compounds represented by formula (6) below.
[Chem. 11]

Mgₓ₁Znₓ₂Al₂(OH)₂₍ₓ₁₊ₓ₂₎₊₄(CO₃)·pH₂O (5)

wherein x1 and x2 are numbers satisfying the relations: 0 ≤ x2/x1 <10 and 2 ≤ x1 + x2 ≤ 20; and p is 0 or a positive number.
[Chem. 12]

[Li_{1/3}Al_{2/3}(OH)₂][A^{q-}_{1/3q}·pH₂O] (6)

wherein A^{q-} is a q-valent anion; and p is 0 or a positive number.

Part of the carbonate anion in the hydrotalcite compound may be displaced with other anions. Water of crystallization of the hydrotalcite compound may be removed. The hydrotalcite compound may be coated with a higher fatty acid (e.g., stearic acid), a higher fatty acid metal salt (e.g., an alkali metal oleate), an organic sulfonic acid metal salt (e.g., an alkali metal dodecylbenzenesulfonate), a higher fatty acid amide, a higher fatty acid ester, or a wax.

Examples of the lubricant include pure hydrocarbon lubricants, such as liquid paraffins, natural paraffins, microwaxes, synthetic paraffins, low-molecular polyethylenes, and polyethylene waxes; halogenated hydrocarbon lubricants; fatty acid lubricants, such as higher fatty acids and oxy fatty acids; fatty acid amide lubricants, such as fatty acid amides and bis-fatty acid amides; ester lubricants, such as lower alcohol esters of fatty acids, polyhydric alcohol esters of fatty acids (e.g., glycerides), polyglycol esters of fatty acids, and aliphatic alcohol esters of fatty acids (ester waxes); metal soaps; aliphatic alcohols; polyhydric alcohols; polyglycols; polyglycerols; partial esters between fatty acids and polyhydric alcohols, polyglycols, or polyglycerols; silicone oils; and mineral oils. These lubricants may be used either individually in combination of two or more thereof.

When at least one member selected from the silicone oils, epoxy coupling agents, hydrotalcite compounds, and lubricants is used as component (E) in the composition of the invention in order to improve flame retardancy, it is preferably used in an amount of 0.01 to 5 parts, more preferably 0.01 to 3 parts, by mass per 100 parts by mass of the sum of components (A) and (B) in view of effectively exhibiting the effects of addition of component (E).

When the silicone oil is contained in the composition, the content of the silicone oil in the composition is preferably 0.01 to 3 parts, more preferably 0.1 to 1 part, by mass per 100 parts by mass of the sum of components (A) and (B) in view of enhancing the effect of addition.

When the epoxy coupling agent is contained in the composition, the content of the epoxy coupling agent in the composition is preferably 0.01 to 3 parts, more preferably 0.1 to 1 part, by mass per 100 parts by mass of the sum of components (A) and (B) in view of enhancing the effect of addition.

When the hydrotalcite compound is contained in the composition, the content of the hydrotalcite compound in the composition is preferably 0.01 to 5 parts, more preferably 0.1 to 0.5 parts, by mass per 100 parts by mass of the sum of components (A) and (B) in view of enhancing the effect of addition.

When the lubricant is contained in the composition, the content of the lubricant in the composition is preferably 0.01 to 3 parts, more preferably 0.1 to 0.5 parts, by mass per 100 parts by mass of the sum of components (A) and (B) in view of enhancing the effect of addition.

The composition of the invention is usable as is, as a flame retardant composition. Various additives may be added thereto when necessary to provide a flame retardant composition. Examples of such additives include phenol antioxidants, phosphite antioxidants, thioether antioxidants, other antioxidants, nucleating agents, UV absorbers, light stabilizers, plasticizers, fillers, fatty acid metal salts, antistatics, pigments, and dyes. The amount of the additives to be added is not particularly limited and may be decided as needed for desired effects.

Examples of the phenol antioxidants include 2,6-di-t-butyl-4-methylphenol, 2,6-di-t-butyl-4-ethylphenol, 2-t-butyl-4,6-dimethylphenol, styrenated phenol, 2,2'-methylenebis(4-ethyl-6-t-butylphenol), 2,2'-thiobis(6-t-butyl-4-methylphenol), 2,2'-thiodiethylene-bis[3-(3,5-di-t-butyl-4-hydroxyphenyl)propionate], 2-methyl-4,6-bis(octylsulfanylmethyl)phenol, 2,2'-isobutylidenebis(4,6-dimethylphenol), isooctyl-3-(3,5-di-t-butyl-4-hydroxyphenyl)propionate, N,N'-hexane-1,6-diylbis[3-(3,5-di-t-butyl-4-hydroxyphenyl)propionamide, 2,2'-oxamidebis[ethyl-3-(3,5-di-t-butyl-4-hydroxyphenyl)propionate], 2-ethylhexyl-3-(3',5'-di-t-butyl-4'-hydroxyphenyl)propionate, 2,2'-ethylene-bis(4,6-di-t-butylphenol), 3,5-di-t-butyl-4-hydroxybenzene propanoic acid C13-15 alkyl esters, 2,5-di-t-amylhydroquinone, hindered phenol polymer (product name: AO.OH.98, manufactured by ADEKA Palmarole SAS), 2,2'-methylenebis[6-(1-methylcyclohexyl)-p-cresol], 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 6-[3-(3-t-butyl-4-hydroxy-5-methyl)propoxy]-2,4,8,10-tetra-t-butylbenz[d,f][1,3,2]-dioxa phosphepin, hexamethylenebis[3-(3,5-di-t-butyl-4-hydroxyphenyl)propionate, calcium bis[monoethyl(3,5-di-t-butyl-4-hydroxybenzyl)phosphonate], a reaction product between 5,7-bis(1,1-dimethylethyl)-3-hydroxy-2(3H)-benzofuranone and o-xylene, 2,6-di-t-butyl-4-(4,6-bis(octylthio)-1,3,5-triazin-2-ylamino)phenol, DL-α-tocopherol (vitamin E), 2,6-bis(α-methylbenzyl)-4-methylphenol, bis[3,3-bis(4'-hydroxy-3'-t-butylphenyl)butanoic acid] glycol ester, 2,6-di-t-butyl-p-cresol, 2,6-diphenyl-4-octadecyloxyphenol, stearyl (3,5-di-t-butyl-4-hydroxyphenyl)propionate, distearyl(3,5-di-t-butyl-4-hydroxybenzyl) phosphonate, tridecyl 3,5-di-t-butyl-4-hydroxybenzylthioacetate, thiodiethylenebis[(3,5-di-t-butyl-4-hydroxyphenyl)propionate], 4,4'-thiobis(6-t-butyl-m-cresol), 2-octylthio-4,6-di(3,5-di-t-butyl-4-hydroxyphenoxy)-s-triazine, 2,2'-methylenebis(4-methyl-6-t-butylphenol), bis[3,3-bis(4-hydroxy-3-t-butylphenyl)butyric acid] glycol ester, 4,4'-butylidenebis(2,6-di-t-butylphenol), 4,4'-butylidene-bis(6-t-butyl-3-methylphenol), 2,2'-ethylidenebis(4,6-di-t-butylphenol), 1,1,3-tris(2-methyl-4-hydroxy-5-t-butylphenyl)butane, bis[2-t-butyl-4-methyl-6-(2-hydroxy-3-t-butyl-5-methylbenzyl)phenyl] terephthalate, 1,3,5-tris(2,6-dimethyl-3-hydroxy-4-t-butylbenzyl)isocyanurate, 1,3,5-tris(3,5-di-t-butyl-4-hydroxybenzyl) isocyanurate, 1,3,5-tris(3,5-di-t-butyl-4-hydroxybenzyl)-2,4,6-trimethylbenzene, 1,3,5-tris[(3,5-di-t-butyl-4-hydroxyphenyl)propionyloxyethyl] isocyanurate, tetrakis[methylene-3-(3',5'-di-t-butyl-4'-hydroxyphenyl)propionate]methane, 2-t-butyl-4-methyl-6-(2-acryloyloxy-3-t-butyl-5-methylbenzyl)phenol, 3,9-bis[2-[3-(3-t-butyl-4-hydroxy-5-methylphenyl)propanoyloxy]-1,1-dimethylethyl]-2,4, 8,10-tetraoxaspiro[5.5]undecane, triethylene glycol bis[3-t-butyl-4-hydroxy-5-methylphenyl)propionate], and 3-(3,5-dialkyl-4-hydroxyphenyl)propionic acid derivatives, such as stearyl-3-(3,5-di-tert-butyl-4-hydroxyphenyl)propionamide, palmityl-3-(3,5-di-tert-butyl-4-hydroxyphenyl)propionamide, myristyl-3-(3,5-di-tert-butyl-4-hydroxyphenyl)propionamide, and lauryl-3-(3,5-di-tert-butyl-4-hydroxyphenyl)propionamide. These phenol antioxidants may be used either individually or in combination of two or more thereof.

Examples of the phosphite antioxidants include triphenyl phosphite, diisooctyl phosphite, heptakis(dipopylene glycol) triphosphite, triisodecyl phosphite, diphenyl isooctyl phosphite, diisooctyl phenyl phosphite, diphenyl tridecyl phosphite, triisooctyl phosphite, trilauryl phosphite, diphenyl phosphite, tris(dipropylene glycol)phosphite, diisodecyl pentaerythritol diphosphite, dioleyl hydrogen phosphite, trilauryl trithiophosphite, bis(tridecyl) phosphite, tris(isodecyl) phosphite, tris(tridecyl) phosphite, diphenyldecyl phosphite, dinonylphenyl bis(nonylphenyl) phosphite, poly(dipropylene glycol) phenyl phosphite, tetraphenyldipropylene glycol diphosphite, trisnonylphenyl phosphite, tris(2,4-di-t-butylphenyl) phosphite, tris(2,4-di-t-butyl-5-methylphenyl) phosphite, tris[2-t-butyl-4-(3-t-butyl-4-hydroxy-5-methylphenylthio)-5-methylphenyl] phosphite, tridecyl phosphite, octyldiphenyl phosphite, didecyl phenyl phosphite, distearyl pentaerythritol diphosphite, a mixture of distearyl pentaerythritol and calcium stearate, alkyl(C10) bisphenol-A phosphite, di(tridecyl)pentaerythritol diphosphite, di(nonylphenyl) pentaerythritol diphosphite, bis(2,4-di-t-butylphenyl) pentaerythritol diphosphite, bis(2,6-di-t-butyl-4-methylphenyl) pentaerythritol diphosphite, bis(2,4,6-tri-t-butylphenyl) pentaerythritol diphosphite, bis(2,4-dicumylphenyl) pentaerythritol diphosphite, tetraphenyl tetra(tridecyl)pentaerythritol tetraphosphite, bis(2,4-di-t-butyl-6-methylphenyl)ethyl phosphite, tetra(tridecyl)isopropylidenediphenol diphosphite, tetra(tridecyl)-4,4'-n-butylidenebis(2-t-butyl-5-methylphenol) diphosphite, hexa(tridecyl)-1,1,3-tris(2-methyl-4-hydroxy-5-t-butylphenyl)butane triphosphite, tetrakis(2,4-di-t-butylphenyl)biphenylene diphosphonite, 9,10-dihydro-9-oxa-10-phosphaphenanthrene 10-oxide, (1-methyl-1-propenyl-3-ylidene)-tris(1,1-dimethylethyl)-5-methyl-4,1-phenylene)hexatrid ecyl phosphite, 2,2'-methylenebis(4,6-t-butylphenyl)-2-ethylhexyl phosphite, 2,2'-methylenebis(4,6-di-t-butylphenyl)octadecyl phosphite, 2,2'-ethylidenebis(4,6-di-t-butylphenyl) fluorophosphite, 4,4'-butylidenebis(3-methyl-6-t-butylphenylditridecyl)phosphite, tris(2-[(2,4,8,10-tetrakis-t-butyldibenzo[d,f][1,3,2]dioxaphosphepin-6-yl)oxy]ethyl)amine, 3,9-bis(4-nonylphenoxy)-2,4,8,10-tetraoxa-3,9-diphosphespiro[5,5]undecane, 2,4,6-tri-t-butylphenyl-2-butyl-2-ethyl-1,3-propanediol phosphite, 4,4'-isopropylidenediphenol C12-15 alcohol phosphites, 3,9-bis(2,6-di-t-butyl-4-methylphenyl)-3,9-diphospha-2,4,8,10-tetraoxa-3,9-diphosphespir o[5,5]undecane, diphenyl isodecyl phosphite, and biphenyl diphenyl phosphite. These phosphite antioxidants may be used either individually or in combination thereof.

Examples of the thioether antioxidants include 3,3'-thiodipropionic acid, C12-C14 alkyl thiopropionate, dilauryl 3,3'-thiodipropionate, ditridecyl 3,3'-thiodipropionate, dimyristyl 3,3'-thiodipropionate, distearyl 3,3'-thiodipropionate, dioctadecyl 3,3'-tiodipropionate, lauryl stearyl thiodipropionate, tetrakis[methylene-3-(dodecylthio)propionate]methane, thiobis(2-t-butyl-5-methyl-4,1-phenylene) bis(3-dodecylthio propionate), 2,2'-thiodiethylenebis(3-aminobutenoate), 4,6-bis(octylthiomethyl)-o-cresol, 2,2'-thiodiethylenebis[3-(3,5-di-t-butyl-4-hydroxyphenyl)propionate], 2,2'-thiobis(4-methyl-6-t-butylphenol, 2,2'-thiobis(6-t-butyl-p-cresol), 2-ethylhexyl-(3,5-di-t-butyl-4-hydroxybenzyl)thioacetate, 4,4'-thiobis(6-t-butyl-3-methylphenol), 4,4'-thiobis(4-methyl-6-t-butylphenol), 4,4'-[thiobis(methylene)]bis(2-t-butyl-6-methyh1-1-hydroxybenzyl), bis(4,6-di-t-butylphenol-2-yl) sulfide, tridecyl 3,5-di-t-butyl-4-hydroxybenzyl thioacetate, 1,4-bis(octylthiomethyl)-6-methylphenol, 2,4-bis(dodecylthiomethyl)-6-methylphenol, distearyl disulfide, and bis(methyl-4-[3-n-alkyl(C12/C14)thiopropionyloxy]-5-t-butylphenyl) sulfide. These thioether antioxidants may be used either individually or in combination thereof.

Examples of the other antioxidants include nitrone compounds, such as N-benzyl-α-phenylnitrone, N-ethyl-α-methylnitrone, N-octyl-α-heptylnitrone, N-lauryl-α-undecylnitrone, N-tetradecyl-α-tridecylnitrone, N-hexadecyl-α-pentadecylnitrone, N-octyl-α-heptadecylnitrone, N-hexadecyl-α-heptadecylnitrone, N-octadecyl-α-pentadecylnitrone, N-heptadecyl-α-heptadecylnitrone, and N-octadecyl-α-heptadecylnitrone; and benzofuran compounds, such as 3-arylbenzofuran-2(3H)-one, 3-(alkoxyphenyl)benzofuran-2-ones, 3-(acyloxyphenyl)benzofuran-2(3H)-one, 5,7-di-tert-butyl-3-(3,4-dimethylphenyl)-benzofuran-2(3H)-one, 5,7-di-tert-butyl-3-(4-hydroxyphenyl)-benzofuran-2(3H)-one, 5,7-di-t-butyl-3-{4-(2-hydroxyethoxy)phenyl}-benzofuran-2(3H)-one, 6-(2-(4-(5,7-di-tert-2-oxo-2,3-dihydrobenzofurn-3-yl)phenoxy)ethoxy)-6-oxohexyl 6-((6-hydroxyhexanoyl)oxy)hexanoate, and 5-di-tert-butyl-3-(4-((15-hydroxy-3,6,9,13-tetraoxapentadecyl)oxy)phenyl)benzofuran-2( 3H)-one. These other antioxidants may be used either individually or in combination thereof.

Examples of the nucleating agent include metal carboxylates, such as sodium benzoate, aluminum 4-tert-butylbenzoate, sodium adipate, and disodium bicyclo[2.2.1]heptane-2,3-dicaboxylate; phosphoric ester metal salts, such as sodium bis(4-tert-butylphenyl) phosphate, sodium 2,2'-methylenebis(4,6-di-tert-butylphenyl) phosphate, and lithium 2,2'-methylenebis(4,6-di-tert-butylphenyl) phosphate; polyhydric alcohol derivatives, such as dibenzylidene sorbitol, bis(methylbenzylidene)sorbitol, bis(3,4-dimethylbenzylidene)sorbitol, bis(p-ethylbenzylidene)sorbitol, bis(dimethylbenzylidene) sorbitol, 1,2,3-trideoxy-4,6: 5,7-bis-O-((4-propylphenyl)methylene)-nonitol, 1,3:2,4-bis(p-methylbenzylidene) sorbitol, and 1,3:2,4-bis-O-benzylidene-D-glucitol (dibenzylidene sorbitol); and amide compounds, such as N,N',N"-tris[2-methylcyclohexyl]-1,2,3-propanetricarboxamide, N,N',N"-tricyclohexyl-1,3,5-benzenetricarboxamide, N,N'-dicyclohexylnaphthalenedicarboxamide, and 1,3,5-tri(dimethylisopropylamino)benzene. These nucleating agents may be used either individually or in combination thereof.

Examples of the UV absorbers include benzophenone compounds, such as 2,4-dihydroxybenzophenone, 5,5'-methylenebis(2-hydroxy-4-methoxybenzophenone), 2-hydroxy-4-n-octoxybenzophenone, 2-hydroxy-4-methoxybenzophenone, 2-hydroxy-4-dodecyloxybenzophenone, and 2,2'-dihydroxy-4-methoxybenzophenone; benzotriazole compounds, such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2-methylenebis(4-tert-octyl-6-benzotriazolylphenol), 2-(2-hydroxy-3-tert-butyl-5-carboxyphenyl)benzotriazole polyethylene glycol ester, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-methacryloyloxyethyl)-5-tert-octylphenyl]benzotriazole, 2-[2-hydroxy-3-(2-methacryloyloxyethyl)-5-tert-butylphenyl]-5-chlorobenzotriazole, 2-[2-hydroxy-5-(2-methacryloyloxyethyl)phenyl]benzotriazole, 2-[2-hydroxy-3-tert-butyl-5-(2-methacryloyloxyethyl)phenyl]benzotriazole, 2-[2-hydroxy-3-tert-amyl-5-(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, and 2-[2-hydroxy-4-(3-methacryloyloxypropyl)phenyl]benzotriazole; benzoates, such as phenyl salicylate, resorcinol monobenzoate, 2,4-di-tert-butylphenyl 3,5-di-tert-butyl-4-hydroxybenzoate, octyl (3,5-di-tert-butyl-4-hydroxy)benzoate, dodecyl (3,5-di-tert-butyl-4-hydroxy)benzoate, tetradecyl (3,5-di-tert-butyl-4-hydroxy)benzoate, hexadecyl (3,5-di-tert-butyl-4-hydroxy)benzoate, octadecyl (3,5-di-tert-butyl-4-hydroxy)benzoate, and behenyl (3,5-di-tert-butyl-4-hydroxy)benzoate; substituted oxanilides, such as 2-ethyl-2'-ethoxyoxanilide, 2-ethoxy-4'-dodecyloxanilide, and 2-ethyl-2'-ethoxy-5'-tert-butyloxanilide; cyanoacrylates, such as ethyl α-cyano-β,β-diphenylacrylate, methyl 2-cyano-3-methyl-3-(p-methoxyphenyl)acrylate, and tetrakis(α-cyano-β,β-diphenylacryloyloxymethyl)methane; and triazines, such as 2-(2-hydroxy-4-(2-(2-ethylhexanoyloxy)ethyloxy)-4,6-diphenyl-1,3,5-triazine, 2,4,6-tris(2-hydroxy-4-hexyloxy-3-methylphenyl)-1,3,5-triazine, 2-(2-hydroxy-4-octyloxyphenyl)-4,6-bis(2,4-dimethylphenyl)-1,3,5-triazine, 2-(4,6-diphenyl-1,3,5-triazin-2-yl)-5-hexyloxyphenol, and 2-(4,6-di(1,1'-biphenyl)-4-yl)-1,3,5-triazin-2-yl)-5-(2-ethylhexyloxy)phenol. These UV absorbers may be used either individually or in combination.

Examples of the light stabilizer include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, tetrakis(2,2,6,6-tetramethyl-4-piperidyl) 1,2,3,4-butanetetracarboxylate, tetrakis(1,2,2,6,6-pentamethyl-4-piperidyl) 1,2,3,4-butanetetracarboxylate, bis(2,2,6,6-tetramethyl-4-piperidyl)di(tridecyl) 1,2,3,4-butanetetracarboxylate, bis(1,2,2,6,6-pentamethyl-4-piperidyl)di(tridecyl) 1,2,3,4-butanetetracarboxylate, bis(1,2,2,4,4-pentamethyl-4-piperidyl) 2-butyl-2-(3,5-di-tert-butyl-4-hydroxybenzyl)malonate, 1-(2-hydroxyethyl)-2,2,6,6-tetramethyl-4-piperidinol/diethyl succinate polycondensates, 1,6-bis(2,2,6,6-tetramethyl-4-piperidylamino)hexane/2,4-dichloro-6-morpholino-s-triazin e polycondensates, 1,6-bis(2,2,6,6-tetramethyl-4-piperidylamino)hexane/2,4-dichloro-6-tert-octylamino-s-tria zine polycondensates, 1,5,8,12-tetrakis[2,4-bis(N-butyl-N-(2,2,6,6-tetramethyl-4-piperidyl)amino)-s-triazin-6-yl ]-1,5,8,12-tetraazadodecane, 1,5,8,12-tetrakis[2,4-bis(N-butyl-N-(1,2,2,6,6-pentamethyl-4-piperidyl)amino)-s-triazin-6 -yl]-1,5,8,12-tetraazadodecane, 1,6,11-tris[2,4-bis(N-butyl-N-(2,2,6,6-tetramethyl-4-piperidyl)amino)-s-triazin-6-yl]amin oundecane, 1,6,11-tris[2,4-bis(N-butyl-N-(1,2,2,6,6-pentamethyl-4-piperidyl)amino)-s-triazin-6-yl]a minoundecane, bis{4-(1-octyloxy-2,2,6,6-tetramethyl)piperidyl}decanedionate, bis{4-(2,2,6,6-tetramethyl-1-undecyloxy)piperidyl}carbonate, TINUVIN NOR 371 from Ciba Specialty Chemicals, 2,2,6,6-tetramethyl-4-piperidyl methacrylate; 1,2,3,4-butanetetracarboxylic acid, polymer with 2,2-bis(hydroxymethyl)-1,3-propanediol and 3-hydroxy-2,2-dimethylpropanal, 1,2,2,6,6-pentamethyl-4-piperidinyl ester; 1,3-bis(2,2,6,6-tetramethylpiperidin-4-yl)-2,4-ditridecylbenzene-1,2,3,4-tetracarboxylate, bis(1-octyloxy-2,2,6,6-pentamethyl-4-piperidyl) sebacate, and poly[[6[[(1,1,3,3-tetramethylbutyl)amino]-1,3,5-triazin-2,4-diyl][(2,2,6,6-tetramethyl-4-pi peridinyl)imino]-1,6-hexanediyl[(2,2,6,6-tetramethyl-4-piperidinyl)imino]]). These light stabilizers may be used either individually or in combination.

Examples of the plasticizer include epoxidized plasticizers, such as epoxidized soybean oil, epoxidized linseed oil, and epoxidized fatty acid octyl esters; methacrylate plasticizers; polyester plasticizers, such as dicarboxylic acid/polyhydric alcohol polycondensates and polycarboxylic acid/polyhydric alcohol polycondensates; polyether ester plasticizers, such as dicarboxylic acid/polyhydric alcohol/alkylene glycol polycondensates, dicarboxylic acid/polyhydric alcohol/arylene glycol polycondensates, polycarboxylic acid/polyhydric alcohol/alkylene glycol polycondensates, and polycarboxylic acid/polyhydric alcohol/arylene glycol polycondensates; aliphatic ester plasticizers, such as adipic esters and succinic esters; and aromatic ester plasticizers, such as phthalic esters, terephthalic esters, trimellitic esters, pyromellitic esters, and benzoic esters. These plasticizers may be may be used either individually or in combination thereof.

Examples of the filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fiber, clay, dolomite, mica, silica, alumina, potassium titanate whisker, wollastonite, fibrous magnesium oxysulfate, and montmorillonite. The filler to be used is selected appropriately according to the particle size (or diameter, length, and aspect ratio in the case of fibrous fillers). These fillers may be used either individually or in combination thereof.

Examples of the fatty acid of the fatty acid metal salts include saturated fatty acids, such as capric acid, 2-ethylhexanoic acid, undecylic acid, lauric acid, tridecylic acid, myristic acid, pentadecylic acid, palmitic acid, margaric acid, stearic acid, nonadecylic acid, arachidic acid, heneicosylic acid, behenic acid, tricosylic acid, lignoceric acid, cerotic acid, montanoic acid, and melissic acid; straight chain unsaturated fatty acids, such as 4-decenoic acid, 4-dodecenoic acid, palmitoleic acid, α-linolenic acid, linoleic acid, γ-linolenic acid, stearidonic acid, petroselinic acid, oleic acid, elaidic acid, vaccenic acid, eicosapentaenoic acid, docosapentaenoic acid, and docosahexaenoic acid; and aromatic fatty acids, such as trimesic acid. Saturated fatty acids, such as myristic acid, stearic acid, and 12-hydroxystearic acid, are preferred. Examples of the metal of the fatty acid metal salts include alkali metals, magnesium, calcium, strontium, barium, titanium, manganese, iron, zinc, silicon, zirconium, yttrium, and hafnium. Alkali metals, such as sodium, lithium, and potassium, are preferred. The fatty acid metal salts may be used either individually or in combination.

Examples of the antistatics include cationic antistatics, such as fatty acid quaternary ammonium ion salts and quaternary polyamine salts; anionic antistatics, such as higher alcohol phosphoric ester salts, higher alcohol EO adducts, polyethylene glycol fatty acid esters, anionic alkylsulfonates, higher alcohol sulfuric ester salts, higher alcohol ethylene oxide adduct sulfuric ester salts, and higher alcohol ethylene oxide adduct phosphoric ester salts; nonionic antistatics, such as polyhydric alcohol fatty acid esters, polyglycol phosphoric esters, and polyoxyethylene alkyl allyl ethers; and amphoteric antistatics, such as amphoteric alkyl betaines, e.g., alkyl dimethylaminoacetic acid betaine, and amphoteric imidazoline surfactants. These antistatics may be used either individually or in combination thereof.

The pigment may be chosen from commercially available products, including pigment red 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254; pigment orange 13, 31, 34, 36, 38, 43, 46, 48, 49, 51, 52, 55, 59, 60, 61, 62, 64, 65, and 71; pigment yellow 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185; pigment green 7, 10, and 36; pigment blue 15, 15:1, 15:2, 15:3, 15:4, 15:5, 15:6, 22, 24, 56, 60, 61, 62, and 64; and pigment violet 1, 19, 23, 27, 29, 30, 32, 37, 40, and 50. These pigments may be used either individually or in combination of two or more thereof.

The dye may be a commercially available product. Examples include azo dyes, anthraquinone dyes, indigoid dyes, triarylmethane dyes, xanthene dyes, alizarine dyes, acridine dyes, stilbene dyes, thiazole dyes, naphthol dyes, quinoline dyes, nitro dyes, indamine dyes, oxazine dyes, phthalocyanine dyes, and cyanine dyes. These dyes may be used either individually or in combination of two or more thereof.

The composition of the invention may be prepared by mixing the essential components (A) to (C) and, if necessary, optional components (D) and (E) with or without heating. Various mixing machines may be used for mixing. Examples of suitable mixing machines include a tumbler mixer, a Henschel mixer, a ribbon blender, a V-blender, a W-blender, a super mixer, and a Nauta mixer. The resulting composition as is may serve as a flame retardant composition.

The flame retardant composition of the invention is obtained by mixing the essential components (A) to (C), other optional components, and, if necessary, components (D) and (E) by the mixing method described above.

The flame retardant composition of the invention is effective in making a resin flame-retardant and is useful as a composition for resins (also called a resin additive). The flame retardant composition of the invention as combined with a resin provides a flame-retardant resin composition (hereinafter "the flame-retardant resin composition of the invention") and is therefore used advantageously as a composition for resins aiming at flame retardation of resins.

The resins that can be made flame-retardant by the flame retardant composition of the invention include various thermoplastic and thermosetting resins. Examples of the thermoplastic resins include polyolefin resins, biomass-containing polyolefin resins, halogen-containing resins, aromatic polyester resins, linear polyester resins, degradable aliphatic polyamide resins, cellulose ester resins, polycarbonate resins, polyurethanes, and polyblends thereof. Examples of the thermosetting resins include phenol resins, urea resins, melamine resins, epoxy resins, and unsaturated polyester resins.

Other resins that can be rendered flame-retardant by the flame retardant composition of the invention include olefinic thermoplastic elastomers (TPEs), styrene TPEs, polyester TPEs, nitrile TPEs, nylon TPEs, vinyl chloride TPEs, polyamide TPEs, and polyurethane TPEs.

The resins may be used either individually or in combination of two or more thereof. When used in combination, the resins may be alloyed.

Where needed, the flame-retardant resin composition of the invention may contain the above described additives, such as phenol antioxidants, phosphite antioxidants, thioether antioxidants, other antioxidants, nucleating agents, UV absorbers, light stabilizers, plasticizers, fillers, fatty acid metal salts, antistatics, pigments, and dyes.

The amount of the phenol antioxidant to be added to the resin is preferably 0.001 to 5 parts, more preferably 0.01 to 1.0 parts, by mass per 100 parts by mass of the flame-retardant resin composition. The amount of the phosphite antioxidant to be added to the resin is preferably 0.001 to 5 parts, more preferably 0.01 to 1.0 parts, by mass per 100 parts by mass of the flame-retardant resin composition. The amount of the thioether antioxidant to be added to the resin is preferably 0.001 to 5 parts, more preferably 0.01 to 1.0 parts, by mass per 100 parts by mass of the flame-retardant resin composition. The amount of the other antioxidant to be added to the resin is preferably 0.001 to 5 parts, more preferably 0.01 to 1.0 parts, by mass per 100 parts by mass of the flame-retardant resin composition.

The amount of the nucleating agent to be added to the resin is preferably 0.001 to 5 parts, more preferably 0.01 to 1.0 parts, by mass per 100 parts by mass of the flame-retardant resin composition. The amount of the UV absorber to be added to the resin is preferably 0.001 to 5 parts, more preferably 0.05 to 0.5 parts, by mass per 100 parts by mass of the flame-retardant resin composition. The amount of the light stabilizer to be added to the resin is preferably 0.001 to 5 parts, more preferably 0.005 to 0.5 parts, by mass per 100 parts by mass of the flame-retardant resin composition. The amount of the plasticizer to be added to the resin is preferably 0.1 to 500 parts, more preferably 1 to 100 parts, by mass per 100 parts by mass of the flame-retardant resin composition. The amount of the filler to be added to the resin is preferably 1 to 100 parts, more preferably 3 to 80 parts, by mass per 100 parts by mass of the flame-retardant resin composition. The amount of the fatty acid metal salt to be added to the resin is preferably 0.001 to 5 parts, more preferably 0.05 to 3 parts, by mass per 100 parts by mass of the flame-retardant resin composition. The amount of the antistatic to be added to the resin is preferably 0.01 to 20 parts, more preferably 3 to 10 parts, by mass per 100 parts by mass of the flame-retardant resin composition. The amount of the pigment to be added to the resin is preferably 0.0001 to 10 parts by mass per 100 parts by mass of the flame-retardant resin composition. The amount of the dye to be added to the resin is preferably 0.0001 to 10 parts by mass per 100 parts by mass of the flame-retardant resin composition.

The above described resins may be used irrespective of molecular weight, degree of polymerization, density, softening point, solvent-insoluble content, degree of stereoregularity, presence or absence of catalyst residue, type and copolymerization ratio of monomers, type of catalyst for polymerization (e.g., Ziegler type or metallocene type), and other characteristics. With regard to the thermoplastic resins, those having a melt flow rate (MFR) of 2.0 to 80 g/10 min, especially those with an MFR of 8.0 to 60 g/10 min, as measured at 230°C and a 2.16 kg load in accordance with JIS K7210 are preferred in view of fabricability and flame retardancy.

Of the above recited resins preferred are polyolefin resins in view of excellent flame retardation effects obtained. Examples of the polyolefin resins include α-olefin polymers, such as polyethylene, low density polyethylene, linear low density polyethylene, high density polyethylene, polypropylene, homopolypropylene, random copolymer polypropylene, block copolymer polypropylene, impact copolymer polypropylene, high impact copolymer polypropylene, isotactic polypropylene, syndiotactic polypropylene, hemisotactic polypropylene, maleic anhydride-modified polypropylene, polybutene, cycloolefin polymers, stereoblock polypropylene, poly-3-methyl-1-butene, poly-3-methyl-1-pentene, and poly-4-methyl-1-pentene; and α-olefin copolymers, such as ethylene-propylene block or random copolymers, ethylene-methyl methacrylate copolymers, and ethylene-vinyl acetate copolymers.

The flame-retardant resin composition of the invention preferably contains 50 to 90 mass%, more preferably 60 to 80 mass%, of the resin and preferably contains 10 to 40 mass%, more preferably 20 to 30 mass%, of the flame retardant composition. With the flame retardant composition content being 10 mass% or more, the resin composition exhibits sufficient flame retardancy. With the flame retardant composition content being not more than 40 mass%, the physical properties of the resin are not impaired.

The flame-retardant resin composition of the invention can be molded to provide molded articles having high flame retardancy. The flame-retardant resin composition may be molded by any molding methods, including extrusion, calendering, injection molding, rolling, compression molding, and blow molding, to give molded articles of various shapes, such as plates, sheets, films, and irregular shapes.

The flame-retardant resin composition of the invention is applicable to housings (including frames, cases, covers, and enclosures) and parts of electric vehicles, machinery, electric and electronic equipment, and OA equipment, and automotive interior and exterior materials, and is particularly applicable to those needed to meet the UL94 or UL94 5VA standard.

The flame-retardant resin composition of the invention and its molded articles find wide applications in various industrial fields, including electric & elecronics, communications, agriculture, forestry, fisheries, mining, construction, foods, fibers, clothing, remedy, coal, petroleum, rubber, leather, automobiles, precision equipment, lumber, building materials, civil engineering, furniture, printing, musical instruments, and so on. Specifically, the applications include housings (frames, cases, covers, and enclosures) and parts of stationery and OA equipment (such as printers, personal computers, word processors, keyboards, PDAs (personal digital assistants), telephone sets, copiers, fax machines, ECRs (electronic cash registers), calculators, electronic diaries, cards, holders, and writing tools), household electric appliances (such as laundry machines, refrigerators, vacuum cleaners, microwave ovens, lighting equipment, game machines, irons, and *kotatsu*), audio and visual equipment (such as TV sets, VTRs, camcorders, radio-cassette recorders, tape recorders, mini discs, CD players, speakers, and liquid crystal displays), electric and electronic components and communication equipment (such as connectors, relays, capacitors, switches, printed circuit boards, coil bobbins, semiconductor sealants, LED sealants, electric wires, cables, transformers, deflection yokes, distribution boards, and clocks); and automotive interior and exterior materials.

The flame-retardant resin composition of the invention and its molded articles also find use as materials for gas (petrol) vehicles, hybrid vehicles, electrical vehicles, train cars, boats, ships, aircrafts, buildings, and houses, such as seats (including stuffing and upholstery), belts, ceiling covering, convertible tops, arm rests, door trims, rear package trays, carpets, rugs, mats, sun visors, wheel covers, mattress covers, air bags, insulating materials, assist grips, assist straps, wire covering, electrical insulators, paints, coatings, overlays, flooring, inside corner moldings, carpets, wallpaper, wall covering, exterior covering, interior covering, roofing, decks, walls, pillars, floor plates, fences, frames and moldings, profiles for windows and doors, roof shingles, siding boards, terraces, balconies, soundproofing boards, heat insulating boards, and window boards; civil engineering materials; and housewares and sporting equipment, such as clothing, curtains, bed sheets, chip boards, fiber boards, carpets and rugs, doormats, sheets, buckets, hoses, containers, glasses, bags, cases, goggles, skis, rackets, tents, and musical instruments.

### Examples

The invention will now be illustrated in greater detail with reference to Examples, but the invention is not deemed to be limited thereto. The mixing ratios in Table 1 are given in part by mass, and the compounding ratios in Tables 2 are in mass percent.

### Synthesis of compound No. 6:

In a four-necked flask equipped with a crescent stirring blade connected to Three-one Motor were put 48.63 g (0.27 mol) of 4-hydroxymethyl-2,6,7-trioxa-1-phosphabicyclo[2.2.2]octane 1-oxide, 180 g of xylene, 24.92 g (0.123 mol) of isophthaloyl chloride, and 31.05 g of triethylamine and heated to 140°C. After 6 hour reacting, the reaction mixture was filtered, and the filter cake was washed with water and hexane and dried in vacuo at 120°C for 6 hours to give 54.38 g of compound No. 6 in a yield of 95%.

Identification of the product was conducted by ¹H-NMR and ³¹P-NMR using Advance III HD NMR Spectrometer from Bruker. The results of NMR analyses are shown below.

### Results of NMR analyses

¹H-NMR (CDCl₃, 400 MHz): δ (ppm) 8.62 (s, 1H, ph), 8.41-8.40 (m, 2H, ph), 7.71-7.75 (t, 1H, ph), 4.90-4.91 (d, 12H, -CH₂-), 4.41 (s, 4H, -CH₂-)
³¹P-NMR (CDCl₃, 400 MHz): δ (ppm) -8.5 to -8.4

### Examples 1 to 2 and Comparative Examples 1 to 3

Compositions of the invention and comparative compositions were prepared according to the formulations shown in Table 1 and evaluated for heat resistance as follows.

### Evaluation of heat resistance:

A thermogravimetric-differential thermal analyzer (Thermo plus EVO, from Rigaku) was used. A sample was heated in an air flow of 200 ml/min at a temperature rise of 10°C/min, and the weight loss in mass% in temperature elevation from 30° to 400°C was recorded. The temperatures at which the weight loss reached 1%, 3%, and 5% were taken for evaluation.

**Table 1**

| Formulation | | Example | | Comparative Example | | |
|---|---|---|---|---|---|---|
| | | 1 | 2 | 1 | 2 | 3 |
| (A): Melamine Pyrophosphate^{*1} | | 40 | 40 | 40 | 40 | 40 |
| (B): Piperazine Pyrophosphate^{*2} | | 60 | 60 | 60 | 60 | 60 |
| (C): Compound No. 6 | | 5.3 | 5.3 | | | |
| Comparative Compound A* | | | | 5.3 | | |
| Comparative Compound B* | | | | | 5.3 | |
| Comparative Compound C* | | | | | | 5.3 |
| (D): Zinc Oxide (ZnO) | | | 5 | | | |
| Heat Resistance (Weight Loss) | 1% | 300 | 293 | 276 | 247 | 273 |
| | 3% | 325 | 319 | 297 | 269 | 304 |
| | 5% | 340 | 337 | 302 | 282 | 318 |

| | | | | | | |
|---|---|---|---|---|---|---|
| *1: Pyrophosphoric acid: melamine = 1:2 (molar ratio) *2: Pyrophosphoric acid: piperazine = 1:1 (molar ratio) * Comparative compound A 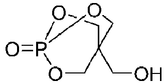 * Comparative compound B 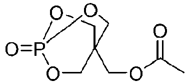 * Comparative compound C 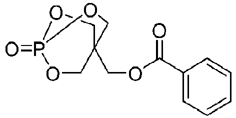 | | | | | | |

### Examples 3 and 4 and Comparative Examples 4 to 6

100 parts (by mass, hereinafter the same) of polypropylene (MFR: 8 g/10 min as measured at 2.16 kg load and 230°C in accordance with JIS K7210), 0.1 parts of calcium stearate as an organic nucleating agent, 0.1 parts of tetrakis[methylene-3-(3,5-di-tert-butyl-4-hydroxyphenyl)propionate]methane as a phenol antioxidant, 0.1 parts of tris(2,4-di-tert-butylphenyl) phosphite as a phosphorus antioxidant, and 0.3 parts of glycerol monostearate as a lubricant were mixed to obtain a polypropylene resin composition. To the polypropylene resin composition was added one of the compositions prepared in Examples 1 and 2 and Comparative Examples 1 to 3 in an amount of 22 mass% or 24 mass% to prepare a flame-retardant resin composition. The resulting flame-retardant resin compositions were evaluated for flame retardancy.

### Evaluation of flame retardancy:

A specimen measuring 127 mm in length, 12.7 mm in width, and 1.6 mm in thickness was held with the long axis vertical. A flame of a burner was applied to the lower end of the specimen for 10 seconds and removed, and the flame duration was recorded. As soon as the specimen stopped burning, the flame was reapplied for 10 seconds, and the flame duration was measured as in the first flame application. Ignition of the cotton layer placed below the specimen by any drips of flaming particles was also observed. The flame duration after each flame application and the ignition of the cotton layer were interpreted into a UL-94V flammability rating. The V-0 rating is the lowest flammability. The V-1 rating is less flame retardancy, and the V-2 rating is still less flame retardancy. The content (mass%) of the composition in the flame-retardant resin composition that achieved the V-0 rating is shown in Table 2.

**Table 2**

| | Example | | Comparative Example | | |
|---|---|---|---|---|---|
| | 3 | 4 | 4 | 5 | 6 |
| Composition of Example 1 | 24 | | | | |
| Composition of Example 2 | | 22 | | | |
| Composition of Comparative Example 1 | | | 24 | | |
| Composition of Comparative Example 2 | | | | 24 | |
| Composition of Compararive Example 3 | | | | | 24 |

### Industrial Applicability

The invention provides a composition excellent in heat resistance as well as flame retardant effect. The invention also provides a flame-retardant resin composition and a molded article thereof exhibiting high flame retardancy. The invention also provides a method for making a resin highly flame retardant.

Being excellent in heat resistance and hardly decomposing in high temperatures, the composition of the invention allows quality stabilization of flame-retardant resin compositions containing the same and their molded articles.

## Claims

1. A composition comprising: 20 to 50 parts by mass of component (A), 50 to 80 parts by mass of component (B), and 1 to 50 parts by mass of component (C), wherein the sum of the components (A) and (B) is 100 parts by mass:
(A) at least one melamine salt selected from the group consisting of melamine orthophosphate, melamine pyrophosphate, and melamine polyphosphate,
(B) at least one piperazine salt selected from the group consisting of piperazine orthophosphate, piperazine pyrophosphate, and piperazine polyphosphate,
(C) a compound represented by general formula (1): 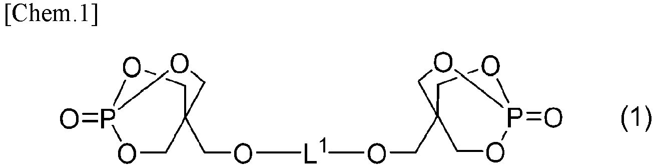 wherein L¹ is a linking group and represents an aromatic group having 6 to 22 carbon atoms or an aliphatic group having 1 to 22 carbon atoms, part of the methylene groups of the aromatic or aliphatic group being optionally replaced with a carbonyl group and/or an amino group.

2. The composition according to claim 1, wherein the linking group L¹ is represented by general formula (2): 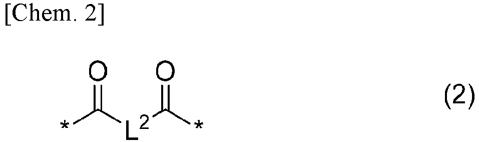 wherein L² is a linking group and represents an aromatic group having 6 to 20 carbon atoms or an aliphatic group having 1 to 20 carbon atoms; and the asterisk mark * indicates the position of the bond to the adjacent oxygen atom.

3. The composition according to claim 2, wherein the linking group L² is an aromatic group having 6 to 20 carbon atoms.

4. The composition according to any one of claims 1 to 3, further comprising 0.01 to 10 parts by mass of zinc oxide as component (D) per 100 parts by mass of the sum of components (A) and (B).

5. The composition according to any one of claims 1 to 4, further comprising 0.01 to 5 parts by mass of component (E) per 100 parts by mass of the sum of components (A) and (B):
(E) at least one member selected from the group consisting of a silicone oil, an epoxy coupling agent, and a lubricant.

6. A flame retardant composition comprising the composition according to any one of claims 1 to 5.

7. A flame-retardant resin composition comprising 100 parts by mass of a resin and 10 to 400 parts by mass of the flame retardant composition according to claim 6.

8. A molded article of the flame-retardant resin composition according to claim 7.

9. A method for making a resin flame-retardant, the method comprising mixing the resin with a composition comprising: 20 to 50 parts by mass of component (A), 50 to 80 parts by mass of component (B), and 1 to 50 parts by mass of component (C), wherein the sum of the components (A) and (B) is 100 parts by mass:
(A) at least one melamine salt selected from the group consisting of melamine orthophosphate, melamine pyrophosphate, and melamine polyphosphate,
(B) at least one piperazine salt selected from the group consisting of piperazine orthophosphate, piperazine pyrophosphate, and piperazine polyphosphate, and
(C) a compound represented by general formula (1): 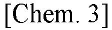 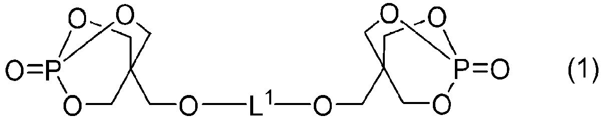 wherein L¹ is a linking group and represents an aromatic group having 6 to 22 carbon atoms or an aliphatic group having 1 to 22 carbon atoms, part of the methylene groups of the aromatic or aliphatic group being optionally replaced with a carbonyl group and/or an amino group.

10. Use of a composition as a flame retardant, the composition comprising: 20 to 50 parts by mass of component (A), 50 to 80 parts by mass of component (B), and 1 to 50 parts by mass of component (C), wherein the sum of the components (A) and (B) is 100 parts by mass:
(A) at least one melamine salt selected from the group consisting of melamine orthophosphate, melamine pyrophosphate, and melamine polyphosphate,
(B) at least one piperazine salt selected from the group consisting of piperazine orthophosphate, piperazine pyrophosphate, and piperazine polyphosphate, and
(C) a compound represented by general formula (1): 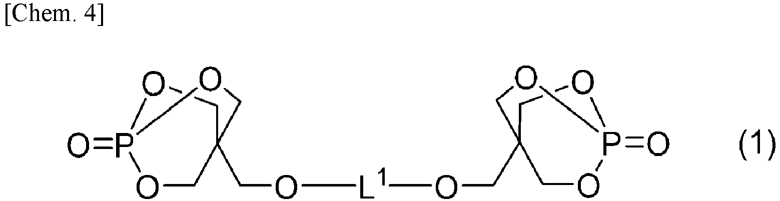 wherein L¹ is a linking group and represents an aromatic group having 6 to 22 carbon atoms or an aliphatic group having 1 to 22 carbon atoms, part of the methylene groups of the aromatic or aliphatic group being optionally replaced with a carbonyl group and/or an amino group.
